# NEW EUROPEAN PATENT SPECIFICATION

(11) **EP 2 624 703 B2**
(45) Date of publication and mention of the opposition decision: **03.03.2021**
(45) Mention of the grant of the patent: 26.11.2014
(21) Application number: 11785055.2
(22) Date of filing: 06.10.2011
(51) Int. Cl.: A23L 1/48, A23D 7/005, A23D 7/015, A23D 7/02, A23L 1/24, A23D 7/01

(54) **EDIBLE EMULSION**
ESSBARE EMULSION
ÉMULSION COMESTIBLE

(30) Priority: 07.10.2010 GB 201016895
(43) Date of publication of application: 14.08.2013
(73) Proprietor: Bakkavör Limited, Lincolnshire PE11 2BB (GB)
(72) Inventor: WHITESIDE, Kerry, Spalding Lincolnshire PE11 2BB (GB); ECONOMIDES, Louis, Spalding Lincolnshire PE11 2BB (GB)
(74) Representative: McWilliams, David John
(86) International application number: PCT/GB2011/051921
(87) International publication number: WO 2012/046072

(56) References cited:
- EP-A2- 0 792 587
- WO-A1-01/17376
- WO-A1-2005/039316
- WO-A1-2005/104872
- WO-A1-2010/102920
- US-A1- 2002 197 382
- US-A1- 2005 089 620
- US-A1- 2008 032 029
- US-A1- 2010 233 342
- Gaonkar, G et al: "Emulsifying functionality of enzyme-modified milk proteins in O/W and mayonnaise-like emulsions", African Journal of Food Science, vol. 4, no. 1, January 2010 (2010-01), pages 16-25,

## Description

This disclosure relates to edible emulsions. The disclosure also relates to methods for producing edible emulsions, and/or methods for producing mayonnaise compositions.

It is known to use edible emulsions as a base for many types of food product. For example, conventional mayonnaise compositions will usually contain an edible oil-in-water emulsion. However, edible emulsions used in conventional mayonnaise compositions typically have a high oil content, e.g. in excess of 70% by weight oil.

There is a demand for food products having a reduced oil content. However, the straightforward step of reducing the oil content in the emulsion used to create a reduced oil product such as mayonnaise will often have a deleterious effect on the texture and mouth-feel of the food product, such that the reduced oil food product is judged to be markedly inferior to the same product made using an emulsion having a higher oil content.

WO2005/039316 includes examples of methods for producing low oil content edible emulsions for use in food products such as mayonnaise. These emulsions incorporate insoluble fibres, which are described as providing consumer acceptable viscosity (cps), texture and sensorial properties consistent with the characteristics of a full fat food product.

This disclosure is concerned with alternative methods and emulsions to those described in WO2005/039316.

The term edible emulsion used herein means that the emulsion is suitable for human consumption.

US 2008/032029 A1 discloses a reduced oil emulsion with viscosity-building emulsifiers. US 2002/197382 A1 discloses an edible oil-in-water emulsion having a reduced content of oil. WO 2010/102920 A1 discloses a method for preparing a fibre containing emulsion. US 2005/089620 A1 discloses a low carbohydrate fibre containing emulsion.

There is provided a method for making an edible emulsion, an edible emulsion, a mayonnaise composition and a method of producing a mayonnaise composition according to the appended claims.

According to one aspect of the invention, there is provided a method for producing an edible emulsion having 55% or less by weight oil, the method including the steps: providing ingredients to be mixed including, in no particular order, oil, water, insoluble fibres and emulsifier; mixing said ingredients to make a pre-emulsion; recovering the pre-emulsion; and then carrying out a homogenisation phase to homogenise the pre-emulsion to produce a homogenised edible emulsion; wherein the pre-emulsion is homogenised using pressures in the range of about 750 bar to about 1500 bar, and the pre-emulsion ingredients also include egg white.

In the examples described in WO2005/039316, the emulsion is homogenised at comparatively low pressures, for example from about 150.0 bar to about 400 bar. The homogenisation phase referred to in WO2005/039316 is described as being used to provide a 'smooth' emulsion, (i.e. an emulsion which is less coarse than without homogenisation).

In the case of the present invention, it has been unexpectedly discovered that the use of dramatically increased pressures (e.g. pressures at least 20-25% higher, and in most cases in excess of 100% higher than those described in WO2005/039316) creates a low oil content emulsion which, when incorporated into a food product such as mayonnaise, has a mouth-feel which is consistent with equivalent food products of much higher oil content. It is believed that the use of the high pressures in accordance with the invention provides advantageous activation of the stabilising properties in the insoluble fibres, which has an unexpected and beneficial effect on the viscosity of the homogenised emulsion.

In exemplary embodiments, the mixed ingredients are homogenised using pressures in the range of about 1000 bar to about 1500 bar, for example in the range of about 1200 bar to about 1500 bar (and all ranges subsumed therein). Hence, in exemplary embodiments, the homogenisation phase is carried out using a high pressure homogeniser (e.g. with homogenisation pressures at or in excess of about 1000 bar, such as 1300 bar).

The advantageous comparison with food products made using higher oil content emulsions has been observed to be greatest when the edible emulsion is prepared using in the region of about 0.2% to about 2% by weight insoluble fibres, based on total weight of the pre-emulsion ingredients (i.e. prior to the homogenisation phase).

A range of about 0.5% to about 1.8% has been found to be particularly effective, with homogenisation pressures in the range about 750 bar to about 1500 bar, more particularly with homogenisation pressures at or in excess of about 1000 bar, for example in the range of about 1200 bar to about 1500 bar, such as 1300 bar.

Other embodiments may be prepared using a higher percentage by weight insoluble fibres, e.g. in the region 2%-10%.

Egg white is included in the pre-emulsion ingredients to be mixed together with the other ingredients prior to the homogenisation phase.

It has been unexpectedly discovered that the addition of egg white prior to the homogenisation phase improves the visual sheen of the resulting homogenised emulsion. The visual effect has been found to be particularly acute when the emulsion is used in a mayonnaise composition.

Furthermore, the addition of egg white has been found to improve the viscosity and mouth feel of the homogenised emulsion, i.e. beyond the improvements yielded by the use of insoluble fibres without the inclusion of egg white.

In exemplary embodiments, the egg white is added as egg white powder.

Tests suggest that the addition of egg white powder at a level in the range of approximately 0.1% to approximately 1.0% by weight has an unexpectedly advantageous effect on the viscosity of the homogenised emulsion, particularly at high homogenisation pressures. A range of approximately 0.2% to 0.7%, more preferably about 0.3% to about 0.5%. has been found to be particularly effective, particularly with homogenisation pressures in the range about 750 bar to about 1500 bar, more particularly with homogenisation pressures at or in excess of about 1000 bar, for example in the range of about 1200 bar to about 1500 bar, such as 1300 bar.

Hence, the method may include the addition of the addition of egg white powder to the ingredients prior to the homogenisation phase at a level in the range of approximately 0.1% to approximately 1.0% by weight, preferably in the range of approximately 0.2% to 0.7%, and more preferably in the range of about 0.3% to about 0.5%.

In exemplary embodiments, egg white is included in the pre-emulsion in the form of liquid egg white or uncooked whole egg (which includes liquid egg white).

Again, test have shown that the inclusion of egg white in this manner can have an unexpectedly advantageous contribution to the visual sheen, as well as, perhaps more importantly, the viscosity of the emulsion, particularly at high homogenisation pressures, such as homogenisation pressures in the range of about 750 bar to about 1500 bar, more particularly with homogenisation pressures at or in excess of about 1000 bar, for example in the range of about 1200 bar to about 1500 bar, such as 1300 bar.

The homogenisation phase may incorporate a plurality of separate homogenisation steps carried out at pressures in the range of about 750 bar to about 1500 bar (and all ranges subsumed therein).

In exemplary embodiments, the homogenisation step is carried out at a temperature in the range from about 1°C to 70°C. In exemplary embodiments, the homogenisation step is carried out at chilled temperature.

In exemplary embodiments, the homogenised emulsion is chilled to a temperature of about 5°C or less after the homogenisation phase, e.g. to comply with food safety regulations.

In exemplary embodiments, the emulsion is acidified, e.g. so that the pH of the homogenised emulsion is in a range of substantially or approximately 2.5 to 4.5. It has been observed that this range of acidity contributes to improvements in the viscosity of the final product.

Any acidulant suitable for use in formulations suitable for human consumption may be used. Examples of such acidulants are referred to in WO2005/039316, such as acetic acid, citric acid, hydrochloric acid, lactic acid, malic acid, phosphoric acid, glucono-delta-lactone, mixtures thereof and the like.

The method may include the addition of starch prior to the homogenisation phase. It has been observed that the addition of starch prior to the homogenisation phase, e.g. at a level of approximately 1.5% by weight, helps to stabilise the mixed pre-emulsion ingredients, and may also contribute to improvements in consistency of the resulting homogenised emulsion. It is believed that the starch ingredient promotes even distribution of the insoluble fibres through the pre-emulsion.

Examples of known types of oil which may be used for edible emulsions of the kind described herein are referred to in WO2005/039316. These include those which are liquid at ambient temperature like avocado, mustard, coconut, cottonseed, fish, flaxseed, grape, olive, palm, peanut, rapeseed, safflower, sesame, soybean, sunflower, mixtures thereof and the like. They also include those which are solid at room temperature such as butter fat, chocolate fat, chicken fat, mixtures thereof and the like.

The insoluble fibres suitable for use in the emulsions and methods described herein are preferably citrus fibres, e.g. found in citrus fruits. However, other fibres may be used, such as those referred to in WO2005/039316, which includes non-citrus fruit fibres, and other sources of the insoluble fibres such as vegetables like legumes, and grains, as well as fibres recovered from tomatoes, peaches, pears, apples, plums, lemons, limes, oranges, grapefruits or mixtures thereof, or insoluble fibres recovered from the hull fibres of peas, oats, barley, soy, or mixtures thereof.

The emulsifier may be of any suitable form, dependent on the type of emulsion required or the intended use of the emulsion. In preferred embodiments, the emulsifier is an egg-based product, such as an egg yolk or egg yolk derived product, e.g. for producing an edible emulsion for use in a mayonnaise composition.

According to another aspect of the invention, there is provided a method of producing a mayonnaise composition, the method including the steps of producing an edible emulsion made in accordance with the above aspect of the invention, and mixing the edible emulsion with other mayonnaise ingredients to produce a low oil content mayonnaise composition.

According to another aspect of the invention, there is provided an edible emulsion having 55% or less by weight oil (e.g. in the region of 50% or less), wherein the edible emulsion is the product of a homogenisation phase to homogenise a mixture of ingredients including oil, water, insoluble fibres and emulsifier, at homogenisation pressures in the range of about 750 bar to about 1500 bar, for example in the range of about 1000 bar to about 1500 bar, or in the range of about 1200 bar to about 1500 bar, such as 1300 bar, wherein the ingredients include egg white.

In exemplary embodiments, the emulsion is the product of a homogenised mixture which included in the region of about 0.2% to about 2% by weight insoluble fibres, e.g. in the region of about 0.5% to about 1.8% based on total weight of pre-homogenisation ingredients, particularly with homogenisation pressures in the range of about 750 bar to about 1500 bar, more particularly with homogenisation pressures at or in excess of about 1000 bar, for example in the range of about 1200 bar to about 1500 bar, such as 1300 bar.

In exemplary embodiments, the edible emulsion has a pH in the range approximately 2.5 to approximately 4.5.

In exemplary embodiments, the edible emulsion is the product of a homogenised pre-emulsion mixture which included a starch content of approximately 1.5% by weight of the pre-homogenisation ingredients.

The edible emulsion is the product of a homogenised mixture including egg white, for example egg white powder at a level of approximately 0.1% to 1.0% by weight of the pre-homogenisation ingredients, preferably approximately in the range 0.2-0.7%, more preferably in the range of about 0.3% to about 0.5%, particularly with homogenisation pressures in the range of about 750 bar to about 1500 bar, more particularly with homogenisation pressures at or in excess of about 1000 bar, for example in the range of about 1200 bar to about 1500 bar, such as 1300 bar.

In exemplary embodiments, the edible emulsion is the product of a homogenised mixture which includes an egg yolk or egg yolk derived emulsifier to produce the edible emulsion, for use in a mayonnaise composition.

The edible emulsions referred to above can be used as a base to make a variety of reduced oil food products, such as mayonnaise and dips, and may also be incorporated into spreads or fillings for use in sandwiches (e.g. pre-packed sandwiches).

Other aspects and features of the invention will be apparent from the appended claims and the following description of an example of the invention, with reference to the accompanying drawings, in which:
Figure 1 is a graph of results from tests carried out on various mayonnaise samples, to illustrate the ameliorative effect of egg white powder content and pressure on the viscosity of the mayonnaise;
Figure 2 is a graph of results from further tests carried out on various mayonnaise samples, to illustrate the ameliorative effect of egg white powder content and pressure on the viscosity of the mayonnaise; and
Figure 3 is a table showing average viscosity results from tests on example emulsions made using different egg white ingredients.

The example herein is provided to facilitate an understanding of the invention. The example is not intended to limit the scope of the claims.

### Example 1

An edible emulsion for use in a mayonnaise composition was made using the following ingredients:

| Ingredient | Percent by Weight |
|---|---|
| Water | 40-70 |
| Egg yolk | 1-5 |
| Oil | 0-50 |
| Salt | 0-2 |
| Sugar | 0-4 |
| Fibre | 0.2-2 |
| Egg White Powder | 0.1-1.0 |
| Starch | 1.5 |
| Vinegar | 0.5-4 |

The water and egg yolk ingredients were mixed in a first phase. The oil was then added and mixed in using medium or moderate shear conditions. The Salt, Sugar, Fibre, Egg White Powder and Starch ingredients were then mixed in using medium or moderate shear conditions. Finally, the Vinegar ingredient was mixed in under medium or moderate shear conditions.

The combination of mixed ingredients was then recovered and passed through a high pressure homogeniser at pressures in the range 750-1500 bar and chilled to less than 5°C.

The result was an homogenised edible emulsion which, when incorporated into a food product such as mayonnaise, created a mouth feel, consistency and viscosity consistent with equivalent food products of much higher oil content, as well as an improved visual sheen.

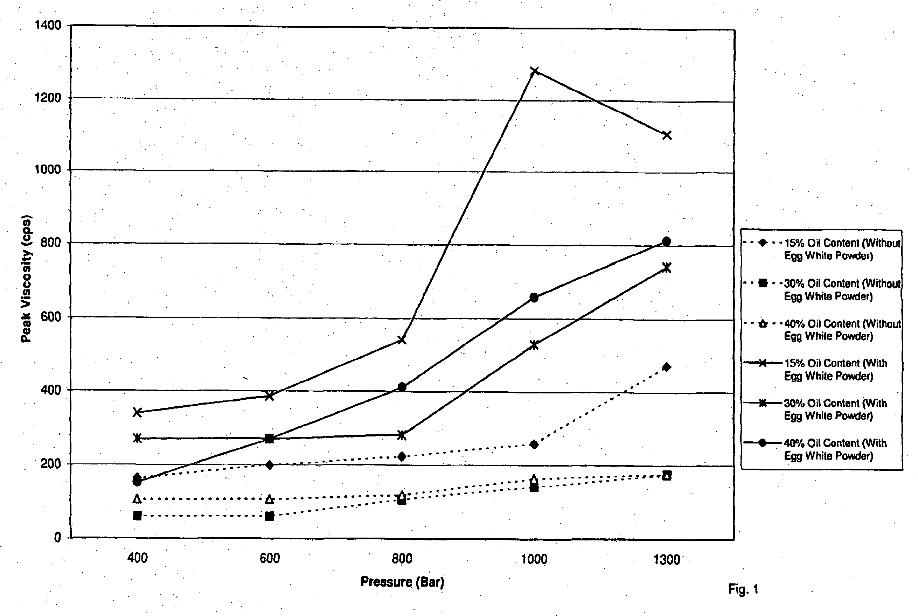

Figure 1 is a graph of results from tests carried out on various mayonnaise samples, to illustrate the ameliorative effect of egg white powder content and pressure on the viscosity of the mayonnaise. As can be seen clearly from the results, the use of an emulsion produced using high pressure homogenisation serves to increase the viscosity of a mayonnaise composition made using the emulsion, particularly when the emulsion is produced at pressures above 750 bar and more particularly above 1000 bar. The graph also shows that the addition of egg white powder (e.g. added at a level in the range of approximately 0.1% to 1.0% by weight pre-homogenisation) has a marked effect on increasing the viscosity of the mayonnaise, particularly when the ingredients are homogenised at such high pressures.

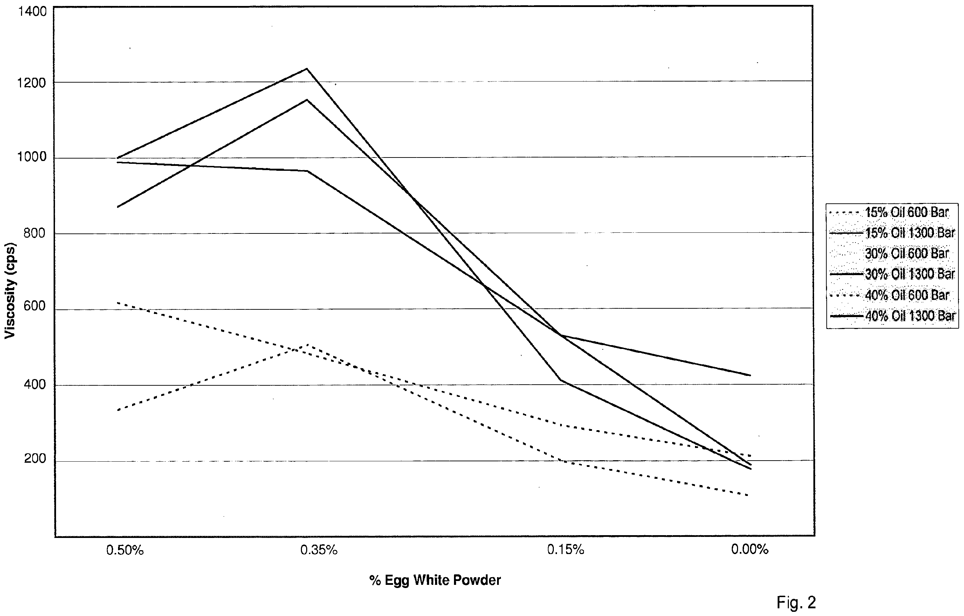

Figure 2 is a graph of results from further tests carried out on various mayonnaise samples, to illustrate the ameliorative effect of egg white powder content and pressure on the viscosity of the mayonnaise. As can be seen clearly from the results, the viscosity of a mayonnaise which incorporates an emulsion produced using high pressure homogenisation (e.g. 1300 bar) and including egg white powder (e.g. added before homogenisation at a level in the range of approximately 0.2-0.5% by weight) is markedly higher than the same mayonnaise incorporating an emulsion with the same ingredients (including the same percentage by weight of egg white powder) prepared at lower pressures (e.g. 600 bar).

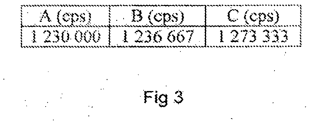

Figure 3 shows a table of results from tests carried out to determine whether whole egg or liquid egg white would provide similarly advantageous effects on the viscosity of homogenised edible emulsions for use in low oil content mayonnaise compositions (e.g. less than 50% oil content). The test were carried out at a homogenisation pressure of 1300 bar.

Column A shows an average viscosity result from a first example using 0.50% egg white powder by weight. Column B shows an average viscosity result from a second example in which the 0.50% egg white powder was replaced with 9% (by weight pre-homogenisation) mixed whole egg. Column C shows an average viscosity result from a third example in which the 0.50% egg white powder was replaced with 5% (by weight pre-homogenisation) liquid egg. As can be seen, the results are generally comparable.

In exemplary embodiments, the egg white ingredient takes the form of uncooked whole egg, wherein the whole egg content of the pre-emulsion ingredients is in the region of between about 1.0% and 15 % by weight, e.g. in the region of between about 8.0% and 13%.

In exemplary embodiments, the egg white ingredient takes the form of liquid egg white, wherein the liquid egg white content of the pre-emulsion ingredients is in the region of between about 1.0% and 10 % by weight, e.g. in the region of between about 2.0% and 7 %.

In summary, it has been found that the use of high pressure homogenisation on a pre-emulsion has an unexpected and ameliorative effect on the organoleptic fat mimetic properties of edible emulsions for use in mayonnaise compositions, in particular on viscosity and mouth-feel. This ameliorative effect is unexpectedly amplified, particularly with regard to increases in viscosity, by the incorporation of egg white (e.g. egg white powder, liquid egg white or uncooked whole egg) into the pre-emulsion.

The edible emulsions referred to herein can be used as a base to make a variety of reduced oil food products, such as mayonnaise and dips, and may also be incorporated into spreads or fillings for use in sandwiches (e.g. pre-packed sandwiches).

## Claims

1. A method for making an edible emulsion having 55 % or less by weight oil; the method including the steps:
a) providing, in no particular order, ingredients including oil, water, insoluble fibres and emulsifier;
b) mixing said ingredients to make a pre-emulsion;
c) recovering the pre-emulsion; and
d) carrying out a homogenisation phase to homogenise the pre-emulsion to produce a homogenised edible emulsion,
**characterised in that**
the pre-emulsion is homogenised at pressures in the range of 750 bar to 1500 bar, and the pre-emulsion ingredients also include egg white.

2. A method according to claim 1 wherein the pre-emulsion is homogenised at pressures in the range of either: 1000 bar to 1500 bar; or 1200 bar to 1500 bar.

3. A method according to either of claims 1 or 2 wherein the homogenised edible emulsion is produced using in the region of between 0.2 % and 2.0 % by weight insoluble fibres, based on total weight of the pre-emulsion ingredients.

4. A method according to any preceding claim, wherein the egg white ingredient is provided in the form of egg white powder.

5. A method according to claim 4 wherein the egg white powder is added at a level of between 0.1 % and 1.0 % by weight of pre-emulsion ingredients.

6. A method according to any of claims 1 to 3 wherein the egg white ingredient takes the form of uncooked whole egg.

7. A method according to claim 6 wherein the whole egg content of the pre-emulsion ingredients is in the region of between 1.0 % and 15 % by weight or in the region of between 8.0 % and 13 %.

8. A method according to any of claims 1 to 3, wherein the egg white ingredient takes the form of liquid egg white.

9. A method according to claim 8 wherein the liquid egg white content of the pre-emulsion ingredients is in the region of between 1.0 % and 10 % by weight or in the region of between 2.0% and 7 %.

10. A method according to any preceding claim wherein the emulsifier is egg yolk-based or egg-yolk derived, in order to produce an edible emulsion for use in a mayonnaise composition.

11. A method according to either of claims 1 or 2 wherein the homogenised emulsion is chilled to a temperature of 5 °C or less.

12. An edible emulsion having 55% or less by weight oil; the edible emulsion made in accordance with any of claims 1 to 11.

13. A mayonnaise composition incorporating an edible emulsion made in accordance with the method of any of claims 1 to 11.

14. A method of producing a mayonnaise composition, the method including the steps of mixing an edible emulsion made in accordance with the method of any of claims 1 to 11 with other mayonnaise ingredients to produce a mayonnaise composition.

## Patentansprüche

1. Verfahren zur Herstellung einer essbaren Emulsion mit 55 Gew.-% oder weniger Öl, wobei das Verfahren die Schritte umfasst:
a) Bereitstellen, in beliebiger Reihenfolge, von Bestandteilen, die Öl, Wasser, unlösliche Fasern und Emulgator umfassen;
b) Mischen der Bestandteile zur Herstellung einer Voremulsion;
c) Gewinnen der Voremulsion; und
d) Durchführen einer Homogenisierungsphase, um die Voremulsion zu homogenisieren und eine homogenisierte essbare Emulsion zu erzeugen,
**dadurch gekennzeichnet, dass**
die Voremulsion bei Drücken im Bereich von 750 bar bis 1500 bar homogenisiert wird und
die Bestandteile der Voremulsion auch Eiweiß umfassen.

2. Verfahren nach Anspruch 1, wobei die Voremulsion bei Drücken im Bereich von entweder: 1000 bar bis 1500 bar; oder 1200 bar bis 1500 bar homogenisiert wird.

3. Verfahren nach einem der Ansprüche 1 oder 2, wobei die homogenisierte essbare Emulsion hergestellt wird unter Verwendung von unlöslichen Fasern im Bereich von zwischen 0,2 und 2,0 Gew.-%, bezogen auf das Gesamtgewicht der Bestandteile der Voremulsion.

4. Verfahren nach einem der vorhergehenden Ansprüche, wobei der Eiweißbestandteil in Form von Eiweißpulver bereitgestellt wird.

5. Verfahren nach Anspruch 4, wobei das Eiweißpulver in einer Menge zwischen 0,1 und 1,0 Gew.-% der Bestandteile der Voremulsion zugegeben wird.

6. Verfahren nach einem der Ansprüche 1 bis 3, wobei der Eiweißbestandteil die Form von rohem Vollei hat.

7. Verfahren nach Anspruch 6, wobei der Gehalt der Bestandteile der Voremulsion an Vollei im Bereich zwischen 1,0 und 15 Gew.-% oder im Bereich zwischen 8,0 und 13 Gew.-% liegt.

8. Verfahren nach einem der Ansprüche 1 bis 3, wobei der Eiweißbestandteil die Form von flüssigem Eiweiß hat.

9. Verfahren nach Anspruch 8, wobei der Gehalt der Bestandteile der Voremulsion an flüssigem Eiweiß im Bereich zwischen 1,0 und 10 Gew.-% oder im Bereich zwischen 2,0 und 7 Gew.-% liegt.

10. Verfahren nach einem der vorhergehenden Ansprüche, wobei der Emulgator auf Eigelb basiert oder von Eigelb stammt, um eine essbare Emulsion zur Verwendung in einer Mayonnaisezusammensetzung zu erzeugen.

11. Verfahren nach einem der Ansprüche 1 oder 2, wobei die homogenisierte Emulsion auf eine Temperatur von 5 °C oder darunter gekühlt wird.

12. Essbare Emulsion mit 55 Gew.-% oder weniger Öl, wobei die essbare Emulsion gemäß einem der Ansprüche 1 bis 11 hergestellt ist.

13. Mayonnaisezusammensetzung, die eine essbare Emulsion einbindet, die gemäß dem Verfahren von einem der Ansprüche 1 bis 11 hergestellt ist.

14. Verfahren zur Herstellung einer Mayonnaisezusammensetzung, wobei das Verfahren die Schritte des Mischens einer gemäß dem Verfahren von einem der Ansprüche 1 bis 11 hergestellten essbaren Emulsion mit anderen Mayonnaisebestandteilen umfasst, um eine Mayonnaisezusammensetzung zu erzeugen.

## Revendications

1. Procédé de préparation d'une émulsion comestible ayant 55 % en poids ou moins d'huile ; le procédé incluant les étapes :
a) fournir, dans un ordre quelconque, des ingrédients incluant de l'huile, de l'eau, des fibres insolubles et de l'émulsifiant ;
b) mélanger lesdits ingrédients pour préparer une pré-émulsion ;
c) récupérer la pré-émulsion ; et
d) réaliser une phase d'homogénéisation pour homogénéiser la pré-émulsion afin de produire une émulsion comestible homogénéisée,
**caractérisé en ce que**
la pré-émulsion est homogénéisée à des pressions comprises dans la plage allant de 750 bar à 1500 bar, et
les ingrédients de la pré-émulsion comprennent également du blanc d'œuf.

2. Procédé selon la revendication 1, dans lequel la pré-émulsion est homogénéisée à des pressions comprises dans la plage : de 1000 bar à 1500 bar ; ou de 1200 bar à 1500 bar.

3. Procédé selon la revendication 1 ou 2, dans lequel l'émulsion comestible homogénéisée est produite en utilisant dans la plage comprise entre 0,2 % et 2,0 % en poids de fibres insolubles, par rapport au poids total des ingrédients de la pré-émulsion.

4. Procédé selon l'une quelconque des revendications précédentes, dans lequel l'ingrédient blanc d'œuf est fourni sous la forme d'une poudre de blanc d'œuf.

5. Procédé selon la revendication 4, dans lequel la poudre de blanc d'œuf est ajoutée à un taux compris entre 0,1 % et 1,0 % en poids des ingrédients de la pré-émulsion.

6. Procédé selon l'une quelconque des revendications 1 à 3, dans lequel l'ingrédient blanc d'œuf est sous la forme d'un œuf entier cru.

7. Procédé selon la revendication 6, dans lequel la teneur en œuf entier des ingrédients de la pré-émulsion est dans la plage comprise entre 1,0 % et 15 % en poids ou dans la plage comprise entre 8,0 % et 13 %.

8. Procédé selon l'une quelconque des revendications 1 à 3, dans lequel l'ingrédient blanc d'œuf est sous la forme de blanc d'oeuf liquide.

9. Procédé selon la revendication 8, dans lequel la teneur en blanc d'œuf liquide des ingrédients de la pré-émulsion est dans la plage comprise entre 1,0 % et 10 % en poids ou dans la plage comprise entre 2,0 % et 7 %.

10. Procédé selon l'une quelconque des revendications précédentes, dans lequel l'émulsifiant est à base de jaune d'œuf ou est dérivé de jaune d'œuf afin de produire une émulsion comestible pour une utilisation dans une composition de mayonnaise.

11. Procédé selon l'une ou l'autre des revendications 1 ou 2, dans lequel l'émulsion homogénéisée est refroidie à une température inférieure ou égale à 5 °C.

12. Émulsion comestible ayant 55 % en poids ou moins d'huile ; l'émulsion comestible étant préparée selon l'une quelconque des revendications 1 à 11.

13. Composition de mayonnaise incorporant une émulsion comestible préparée selon le procédé selon l'une quelconque des revendications 1 à 11.

14. Procédé de production d'une composition de mayonnaise, le procédé incluant les étapes de mélange d'une émulsion comestible préparée selon le procédé selon l'une quelconque des revendications 1 à 11 avec d'autres ingrédients pour mayonnaise afin de produire une composition de mayonnaise.
